# EUROPÄISCHE PATENTSCHRIFT

(11) **EP 3 728 835 B1**
(45) Veröffentlichungstag und Bekanntmachung des Hinweises auf die Patenterteilung: **08.02.2023**
(21) Anmeldenummer: 18827068.0
(22) Anmeldetag: 19.12.2018
(51) Int. Cl.: F03D 1/06, F03D 80/70

(54) **WINDKRAFTANLAGE MIT ROTORNABENVERLÄNGERUNG**
WIND TURBINE COMPRISING A ROTOR HUB EXTENSION
ÉOLIENNE COMPRENANT UN MOYEU DE ROTOR AVEC UNE SECTION D'EXTENSION

(30) Priorität: 21.12.2017 DE 102017223615; 10.07.2018 DE 102018211430
(43) Veröffentlichungstag der Anmeldung: 28.10.2020
(73) Patentinhaber: thyssenkrupp rothe erde Germany GmbH, 44137 Dortmund (DE); thyssenkrupp AG, 45143 Essen (DE)
(72) Erfinder: BECKER, Daniel, 34317 Habichtswald-Ehlen (DE); HANDRECK, Thomas, 59609 Anröchte (DE); LÜNEBURG, Bernd, 45481 Mülheim (DE)
(74) Vertreter: thyssenkrupp Intellectual Property GmbH
(86) Internationale Anmeldenummer: PCT/EP2018/085999
(87) Internationale Veröffentlichungsnummer: WO 2019/122023

(56) Entgegenhaltungen:
- AU-A1- 2016 333 250
- US-A1- 2003 116 970
- US-A1- 2014 084 592

## Beschreibung

### Stand der Technik

Die vorliegende Erfindung betrifft eine Windkraftanlagegemäß dem Oberbegriff von Patentanspruch 1.

Derartige Windkraftanlagen sind aus dem Stand der Technik bekannt. Aktuelle Entwicklungstrends im Multi-MW-Bereich von Windenergieanlagen gehen in Richtung stetig größer werdender Naben (Scaling), wobei das Blattlager zumeist als separate d.h. eigenständige Komponente mit skaliert werden muss. Die Baugröße der Nabe wird jedoch dem aktuellen Trend folgend an praktische Grenzen stoßen, die durch logistische und technologische Randbedingungen gesetzt sind. Dennoch ist es gewünscht, dass die Blattlänge und damit mechanisch bedingt der Blattflanschdurchmesser und der Durchmesser des Blattlagers (sowie die Turmhöhe) zwecks weiterer Optimierung der Energieausbeute der Windkraftanlagen weiter ansteigen. Aus dem Stand der Technik bekannte Vorrichtungen können die sich daraus ergebenden Probleme nicht zufriedenstellend lösen.

In der Druckschrift US 2014/0084592 A1 wird eine Windkraftanlage nach dem Oberbegriff von Patentanspruch 1 beschrieben. Bei dieser Windkraftanlage wird ein spezieller zweiteiliger Generator verwendet, der einen inneren Stator und einen äußeren Rotor aufweist. Der innere Stator ist mit der Gondel der Windkraftanlage verbunden. Der äußere Rotor umschließt den inneren Stator. In dem inneren Stator sind die Einrichtungen zur Stromerzeugung angeordnet (poles 23, coils 24). Die Rotorblätter der Windkraftanlage sind mit einem Innenring eines Blattlagers über so verbunden. Der Außenring des Blattlagers ist mit einer konischen Rotornabenverlängerung verbunden.

### Offenbarung der Erfindung

Es ist eine Aufgabe der vorliegenden Erfindung, eine Windkraftanlage vorzuschlagen, die eine vorteilhafte Hochskalierung der Größe von Windkraftanlagen ermöglicht und bei der das Rotorblatt auf einfache Weise mit dem Blattlager verbindbar ist.

Erfindungsgemäß wird die Aufgabe gelöst durch eine Windkraftanlage mit den Merkmalen von Patentanspruch 1. Weiterbildungen der Erfindung sind in den Unteransprüchen angegeben.

Erfindungsgemäß ist der dem Blattlager zugewandte Durchmesser einer konischen Rotornabenverlängerung größer als der der Rotornabe zugewandte Durchmesser der konischen Rotornabenverlängerung, so dass sich die Rotornabenverlängerung in Richtung der Rotornabe verjüngt. Dies ermöglicht es, das Rotorblatt (und somit das Blattlager) zu vergrö-ßern, ohne den Anschluss der Rotornabenverlängerung an der Rotornabe (und somit insbesondere die Rotornabe selbst) ebenfalls zu vergrößern. Hierdurch kann in vorteilhafter Weise eine Windkraftanlage realisiert werden, bei der der Rotornabenflanschdurchmesser kleiner ist als der Rotorblattflanschdurchmesser. Es ist somit erfindungsgemäß möglich, eine in vorteilhafter Weise vergleichsweise kleine und ggf. leichte Rotornabe zu verwenden, was sich vorteilhaft auf die Kosten, Transportmöglichkeiten und das Gewicht auswirken kann. Gleichzeitig ergibt sich eine erhöhte Variabilität bei der Kombination von Komponenten, da der Rotorblattflanschdurchmesser und der Rotornabenflanschdurchmesser nicht gleich sein müssen. Durch die konische Form der Rotornabenverlängerung ist insbesondere eine unkomplizierte und kostengünstige Fertigung möglich. Ferner ist es erfindungsgemäß möglich, dass das Rotorblatt mit dem Blattlager mittelbar oder unmittelbar verbunden ist, beispielsweise verschraubt, wodurch das Blattlager leicht ausgebaut werden kann. Des Weiteren ergibt sich erfindungsgemäß der Vorteil, dass die Steifigkeit der nabenseitigen Anschlusskonstruktion durch die Rotornabenverlängerung verbessert werden kann, wodurch die Rotornabe gewichtsoptimiert bzw. größenoptimiert ausgeführt werden kann. Hierdurch kann trotz erhöhter Belastung durch weitere Skalierung der Komponenten auf Zusatzverstärkungen im Blattlager verzichtet werden bzw. solche Zusatzverstärkungen können zumindest reduziert werden.

Es ist insbesondere vorgesehen, dass die Rotornabenverlängerung hohl ausgebildet ist. Gemäß einer Ausführungsform der vorliegenden Erfindung ist es vorgesehen, dass das Rotorblatt mit dem Blattlager unmittelbar bzw. direkt, also insbesondere adapter- bzw. zwischenstücklos, verbunden ist. Es ist dabei bevorzugt möglich, dass das Blattlager und das Rotorblatt mithilfe eines Befestigungsmittels (beispielsweise mithilfe von Schrauben) formschlüssig oder form- und kraftschlüssig verbunden sind. Dies kann sich insbesondere vorteilhaft auf die Montage und Demontage der Komponenten auswirken.

Erfindungsgemäß ist es vorgesehen, dass das Blattlager einen ersten Blattlagerring und einen zweiten Blattlagerring umfasst, wobei der erste Blattlagerring formschlüssig oder form- und kraftschlüssig mit der Rotornabenverlängerung verbunden ist oder als Teil der Rotornabenverlängerung ausgebildet ist. Hierdurch ist es gemäß der Erfindung vorgesehen, dass der erste Blattlagerring fest mit der Rotornabenverlängerung verbunden (beispielsweise verschraubt) ist oder dass der erste Blattlagerring integriert als Teil der Rotornabenverlängerung ausgebildet ist. Insbesondere die Integration des ersten Blattlagerrings, also bevorzugt des feststehenden Teils des Blattlagers, in die Rotornabenverlängerung führt vorteilhaft zu einer erhöhten Steifigkeit des Blattlagers, zu einer Reduktion des Gewichts und zu verringerten Kosten, da ein separater Ring eingespart werden kann. Darüber hinaus ist es möglich, dass mithilfe der Rotornabenverlängerung eine leichtere Demontage, insbesondere mit Blick auf einen Austausch oder eine Wartung des Blattlagers, vorgenommen werden kann. Dies wird besonders vorteilhaft ermöglicht, wenn das Blattlager (bzw. ein Blattlagerring des Blattlagers) als Teil der Rotornabenverlängerung ausgebildet ist.

Erfindungsgemäß ist es vorgesehen, dass der erste Blattlagerring als äußerer Blattlagerring und der zweite Blattlagerring als innerer Blattlagerring ausgebildet ist. Der äußere Blattlagerring ist vorzugsweise der mit der Rotornabenverlängerung direkt verbundene Blattlagerring, während der innere Blattlagerring vorzugsweise der mit dem Rotorblatt direkt verbundene Blattlagering ist.

Erfindungsgemäß ist es vorgesehen, dass der zweite Blattlagerring mit dem Rotorblatt mittelbar oder unmittelbar verbunden ist.

Insbesondere ist es möglich, dass der zweite Blattlagerring mit dem Rotorblatt unmittelbar bzw. direkt, also insbesondere adapter- bzw. zwischenstücklos, verbunden ist. Es ist dabei bevorzugt möglich, dass der zweite Blattlagerring mit dem Rotorblatt mithilfe eines Befestigungsmittels (beispielsweise mithilfe von Schrauben) formschlüssig bzw. form- und kraftschlüssig verbunden ist.

Gemäß einer Ausführungsform der vorliegenden Erfindung ist es vorgesehen, dass ein Zwischenstück zwischen dem Blattlager und dem Rotorblatt angeordnet ist. Es ist dabei insbesondere möglich, dass das Zwischenstück mithilfe eines Befestigungsmittels am Blattlager (am zweiten Blattlagerring) befestigt ist und mithilfe eines Befestigungsmittels am Rotorblatt befestigt ist. Dies kann sich vorteilhaft auf die rotorblattseitige Steifigkeit der Anschlusskonstruktion auswirken. Gemäß dieser Ausführungsform liegt also eine mittelbare Verbindung zwischen dem Blattlager und dem Rotorblatt vor.

Gemäß einer Ausführungsform der vorliegenden Erfindung ist es möglich, dass das Blattlager eine dreireihige Rollendrehverbindung umfasst bzw. als dreireihige Rollendrehverbindung ausgebildet ist.

Es ist bevorzugt möglich, dass eine Nase an dem ersten oder zweiten Blattlagerring angeordnet ist, also insbesondere an dem inneren oder äußeren Blattlagerring. Ferner ist es gemäß einer Ausführungsform der vorliegenden Erfindung möglich, dass der andere Blattlagerring (also der Blattlagerring, an dem die Nase nicht angeordnet ist) zweiteilig ausgebildet ist.

Alternativ ist es gemäß einer Ausführungsform der vorliegenden Erfindung möglich, dass das Blattlager ein Toroidallager umfasst bzw. als Toroidallager ausgebildet ist oder dass das Blattlager ein Vierpunktlager umfasst bzw. als Vierpunktlager ausgebildet ist oder dass das Blattlager ein Doppelvierpunktlager umfasst bzw. als Doppelvierpunktlager ausgebildet ist. Denkbar ist, dass die dreireihige Rollenverbindung, das Toroidallager, das Vierpunktlager oder das Doppelvierpunktlager weitere zusätzliche Lagerungen aufweisen. Diese können weitere zusätzliche Radialrollen und/oder weitere zusätzliche Axialrollen aufweisen. Denkbar ist weiterhin, dass das Blattlager eine vierreihige Rollendrehverbindung (4RD), Kreuzrollenlager oder Doppelkreuzrollenlager umfasst beziehungsweise als eine vierreihige Rollendrehverbindung (4RD), Kreuzrollenlager oder Doppelkreuzrollenlager ausgebildet ist.

Eine dreireihige Rollendrehverbindung (3RD) hat im Vergleich zu einem Vierpunktlager oder Doppelvierpunktlager eine höhere Lebensdauer und kann bei gleicher Baugröße höhere Kräfte übertragen. Dies ist insbesondere bei immer größer werdenden Windkraftanlagen von Vorteil. Die Rotornabenverlängerung ermöglicht gemäß einer Ausführungsform der vorliegenden Erfindung für den Einsatz der dreireihigen Rollendrehverbindung eine vorteilhaft erhöhte Steifigkeit, die für die 3RD vorteilhaft ist. Dies ist insbesondere deswegen der Fall, da mit der Kraftübertragung vom Ende des Rotorblattes auf die Rotornabenverlängerung eine Kraftübertragung von Rohr zu Rohr erfolgt, die gleichmäßiger verteilt ist, als eine Kraftübertragung von Lager zu Rotornabe. Insbesondere die axiale Kraftübertragung von Rotorblatt zu Rotornabenverlängerung ist gleichmäßiger als von Rotorblatt über Blattlager direkt zur Rotornabe.

Die gleichmäßige axiale Steifigkeit wäre hingegen beim Anschluss direkt an die Rotornabe nicht in diesem Maße gewährleistet, so dass eine lagerbauformabhängige ovale Verformung des Nabenanschlusses am Blattlager entstehen kann. Die Ungleichmäßigkeit der Rotornabe (insbesondere einer Kugelnabe) wird durch die Rotornabenverlängerung somit gemäß einer Ausführungsform der vorliegenden Erfindung vorteilhaft reduziert/ausgeglichen. Die Rotornabenverlängerung kann somit für eine gleichmäßige axiale Steifigkeit am Blattanschluss sorgen.

Gemäß einer Ausführungsform der vorliegenden Erfindung ist es vorgesehen, dass die Rotornabenverlängerung separat von der Rotornabe ausgebildet ist. Hierdurch ist es möglich, dass die Rotornabenverlängerung ein (von der Rotornabe) separates Teil ist, das an der Rotornabe angebracht bzw. mit der Rotornabe verbunden ist (beispielsweise verschraubt). Dies wirkt sich besonders vorteilhaft auf die Montage und Demontage der Rotornabenverlängerung aus und kann gleichzeitig zu einer verbesserten Steifigkeit im Anschlussbereich/Verbindungsbereich der Rotornabe durch die Rotornabenverlängerung führen.

Gemäß einer Ausführungsform der vorliegenden Erfindung ist es vorgesehen, dass die Rotornabenverlängerung unbeweglich, und insbesondere formschlüssig oder form- und kraftschlüssig, an der Rotornabe angeordnet ist. Hierdurch ist es gemäß einer Ausführungsform der vorliegenden Erfindung in vorteilhafter Weise möglich, dass die Rotornabenverlängerung mithilfe eines Befestigungsmittels feststehend an der Rotornabe angebracht (beispielsweise verschraubt) wird. Auch im Betrieb der Windkraftanlage findet somit keine Relativbewegung zwischen der Rotornabe und der Rotornabenverlängerung statt.

Gemäß einer Ausführungsform der vorliegenden Erfindung ist es vorgesehen, dass ein Pitchantrieb als Teil der Rotornabenverlängerung ausgebildet ist oder innerhalb der Rotornabenverlängerung angeordnet ist. Der Pitchantrieb ist dabei bevorzugt zur Verstellung des Anstellwinkels des Rotorblatts ausgebildet (insbesondere unter Zuhilfenahme des Blattlagers).

Gemäß einer Ausführungsform der vorliegenden Erfindung ist es vorgesehen, dass die Rotornabenverlängerung eine erste Nabenverlängerungskomponente und eine zweite Nabenverlängerungskomponente umfasst, wobei die erste und zweite Nabenverlängerungskomponente bevorzugt parallel zur Hauptrotationsachse des Blattlagers ausgebildet sind, insbesondere als Teilschalen der Rotornabenverlängerung. Hierdurch ist es gemäß einer Ausführungsform der vorliegenden Erfindung möglich, eine besonders vorteilhafte Wartung und Demontage der Rotornabenverlängerung zu ermöglichen. Denkbar ist, dass die Rotornabenverlängerung mindestens eine weitere Nabenverlängerungskomponente aufweist. Es ist möglich, dass die erste und zweite Nabenverlängerungskomponente parallel zur Hauptrotationsachse des Blattlagers ausgebildet sind oder auch in einem Winkel dazu. In beiden Fällen ist es insbesondere möglich, dass die Rotornabenverlängerungen als ausgebildet sind. Ganz besondere Vorteile ergeben sich für den Fall, dass der erste Blattlagerring als Teil der Rotornabenverlängerung ausgebildet ist bzw. in der Rotornabenverlängerung integriert ist. So kann eine Demontage und Wartung des Blattlagers oder dessen Komponenten im eingebauten Zustand ermöglicht werden. Es könnte z. B. eine der Nabenverlängerungskomponenten (mit integriertem Blattlagerring) ausgebaut werden und so das Blattlagerinnere zur Wartung oder zum Austausch von Komponenten erreicht werden. Es müsste also lediglich eine der Nabenverlängerungskomponenten (insbesondere Halbschalen) entfernt werden und nicht das komplette Rotorblatt (mit Blattlagerring). Sinnvollerweise erfolgt die Demontage und Wartung dabei in 12-Uhr-Stellung oder in 6-Uhr-Stellung des Rotorblatts, also wenn die Längsachse des Rotorblatts parallel zur Längsachse des Turms der Windkraftanlage verläuft. In diesen Stellungen wirken im Wesentlichen keine Biegemomente auf die verbleibende Nabenverlängerungskomponente ein.

Gemäß einer Ausführungsform der vorliegenden Erfindung ist es vorgesehen, dass die Rotornabenverlängerung, insbesondere die erste und/oder zweite Nabenverlängerungskomponente, Rippen aufweist, bevorzugt an der Innenseite der Rotornabenverlängerung. Hierdurch kann in vorteilhafter Weise eine besonders verbesserte Steifigkeit erzielt werden, die sich vorteilhaft auf die Optimierung des Gewichts und die Skalierungsmöglichkeiten auswirkt.

Gemäß einer Ausführungsform der vorliegenden Erfindung ist es vorgesehen, dass eine Nase an dem ersten Blattlagerring oder dem zweiten Blattlagerring angeordnet ist. Insbesondere ist vorgesehen, dass eine Nase an dem inneren oder äußeren Blattlagerring angeordnet ist. Ferner ist denkbar, dass der andere Blattlagerring, an dem die Nase nicht angeordnet ist, zweiteilig ausgebildet ist. So ist es beispielsweise denkbar, dass der Blattlagerring, an dem die Nase nicht angeordnet ist, ein Teil der Rotornabenverlängerung ist, dass also der Blattlagerring, an dem die Nase nicht angeordnet ist, in die Rotornabenverlängerung integriert ist. Denkbar ist aber auch, dass der Blattlagerring, an dem die Nase nicht angeordnet ist, nur teilweise ein Teil der Rotornabenverlängerung ist. In diesem Falle weist die Windkraftanlage vorzugsweise einen Lagerteil auf, welcher zusammen mit der Rotornabenverlängerung den Blattlagerring bildet, an dem die Nase nicht angeordnet ist. Der Lagerteil ist vorzugsweise mit einer Verschraubung an der Rotornabenverlängerung fixiert. Die Nase weist vorzugsweise drei Laufflächen für Wälzkörper auf, wobei eine Lauffläche parallel zur Drehachse des Blattlagers angeordnet ist und zwei Laufflächen orthogonal zur Drehachse des Blattlagers angeordnet sind. Dies ermöglicht die Verwendung einer dreireihigen Rollendrehverbindung (3RD). Denkbar ist auch, dass eine vierreihige Rollendrehverbindung (4RD) Verwendung findet.

Erfindungsgemäß ist es vorgesehen, dass die Rotornabenverlängerung mindestens eine Durchführöffnung zum Durchführen eines Befestigungselements zum Befestigen des Rotorblattes am Blattlager und/oder eines Werkzeugs im Wesentlichen parallel zur Hauptrotationsachse des Blattlagers aufweist. Ist die Rotornabenverlängerung teilweise als äußerer Blattlagerring ausgebildet, so kann durch die mindestens eine Durchführöffnung bei der Montage die Befestigung des Rotorblattes mit dem inneren Blattlagerring erfolgen. Das Rotorblatt kann zur Befestigung beispielsweise verschraubt werden. Dazu ist die mindestens eine Durchführöffnung ausreichend dimensioniert und parallel zu einer - zur Befestigung des Rotorblattes mit dem inneren Blattlagerring vorgesehenen Befestigungsöffnung im Inneren Blattlagerring angeordnet. Der Querschnitt der mindestens einen Durchführungsöffnung ist vorzugsweise kreisförmig, kann aber auch oval oder eckig sein. Denkbar ist, dass die mindestens eine Durchführungsöffnung Zentrierhilfen zum Zentrieren des Befestigungselements bei der Montage des Rotorblattes aufweist.

Gemäß einer Ausführungsform der vorliegenden Erfindung ist es vorgesehen, dass die Rotornabenverlängerung mittels eines Umformverfahrens hergestellt ist.

Alternativ ist es auch denkbar, dass die Rotornabenverlängerung mittels eines Gussverfahrens als Gussteil oder mittels Schweißen als Schweißkonstruktion hergestellt ist.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

**Figur 1** zeigt schematisch einen Teilbereich einer Windkraftanlage gemäß einer Ausführungsform der vorliegenden Erfindung.
**Figur 2** zeigt schematisch einen Teilbereich einer Windkraftanlage gemäß einer Ausführungsform der vorliegenden Erfindung.
**Figur 3** zeigt schematisch einen Teilbereich einer Windkraftanlage gemäß einer Ausführungsform der vorliegenden Erfindung.
**Figur 4** zeigt schematisch einen Teilbereich einer Windkraftanlage gemäß einer Ausführungsform der vorliegenden Erfindung.
**Figur 5** zeigt schematisch einen Teilbereich einer Windkraftanlage gemäß einer Ausführungsform der vorliegenden Erfindung.
**Figur 6** zeigt schematisch einen Teilbereich einer Windkraftanlage gemäß einer Ausführungsform der vorliegenden Erfindung.
**Figur 7** zeigt schematisch einen Teilbereich einer Windkraftanlage gemäß einer Ausführungsform der vorliegenden Erfindung.
**Figur 8** zeigt schematisch einen Teilbereich einer Windkraftanlage gemäß einer Ausführungsform der vorliegenden Erfindung.
**Figur 9** zeigt schematisch einen Teilbereich einer Windkraftanlage gemäß einer Ausführungsform der vorliegenden Erfindung.
**Figur 10** zeigt schematisch einen Teilbereich einer Windkraftanlage gemäß einer Ausführungsform der vorliegenden Erfindung.
**Figur 11** zeigt schematisch einen Teilbereich einer Windkraftanlage gemäß einer Ausführungsform der vorliegenden Erfindung.
**Figur 12** zeigt schematisch einen Teilbereich einer Windkraftanlage gemäß einer Ausführungsform der vorliegenden Erfindung.
**Figur 13** zeigt schematisch einen Teilbereich einer Windkraftanlage gemäß einer Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt beziehungsweise erwähnt.

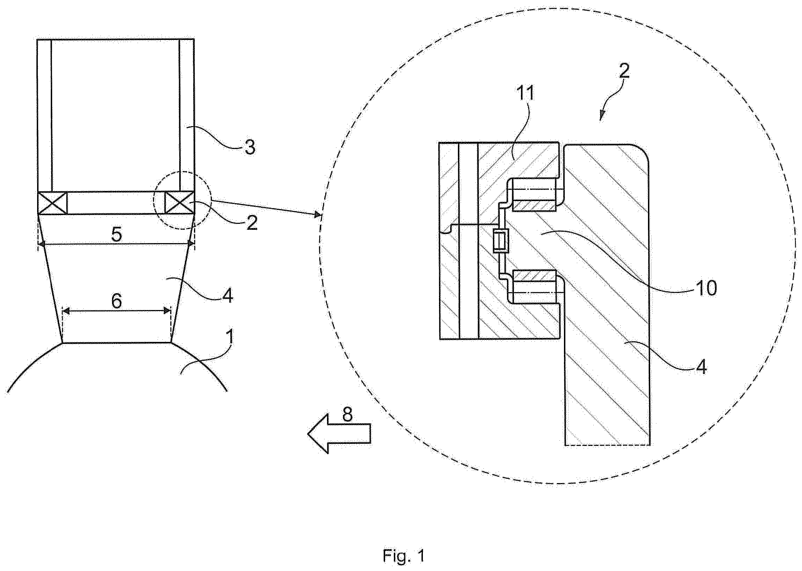

In **Figur 1** ist schematisch ein Teilbereich einer Windkraftanlage gemäß einer Ausführungsform der vorliegenden Erfindung dargestellt. Insbesondere ist ein Teilbereich eines Rotorsystems mit einer Rotornabe 1 dargestellt. Die Rotornabe 1 ist mit einer Rotornabenverlängerung 4 verbunden, welche als von der Rotornabe 1 separates Teil ausgebildet ist. Die Rotornabenverlängerung 4 und die Rotornabe 1 sind dabei unbeweglich zueinander angeordnet, sodass im Betrieb keine relative Bewegung zwischen der Rotornabenverlängerung 4 und der Rotornabe 1 stattfindet. An dem von der Rotornabe 1 abweisenden Ende der Rotornabenverlängerung 4 ist ein Blattlager 2 angebracht. Die Rotornabenverlängerung 4 verjüngt sich in Richtung der Rotornabe 1 und hat eine konische Form. Dadurch ist ein erster Durchmesser 5 der Rotornabenverlängerung 4 am blattlagerseitigen Ende der Rotornabenverlängerung 4 größer als ein zweiter Durchmesser 6 der Rotornabenverlängerung 4 am rotornabenseitigen Ende der Rotornabenverlängerung 4. Ein Bereich um das Blattlager 2 ist in Figur 1 innerhalb des gestrichelten Kreisausschnitts vergrößert dargestellt. Dargestellt ist hier eine dreireihige Rollendrehverbindung. Es ist erfindungsgemäß möglich, dass das Blattlager 2 einen ersten und einen zweiten Blattlagerring 10, 11 umfasst. Der erste Blattlagerring 10 ist dabei entweder an der Rotornabenverlängerung 4 montiert oder direkt in die Rotornabenverlängerung 4 integriert (also als Teil der Rotornabenverlängerung 4 ausgebildet, wie in Figur 1 dargestellt). Der zweite Blattlagerring 11 ist bei der in Figur 1 dargestellten Ausführungsform unmittelbar mit dem Rotorblatt 3 verbunden. Die Rotornabenverlängerung 4 umfasst bevorzugt eine erste Nabenverlängerungskomponente und eine zweite Nabenverlängerungskomponente (nicht dargestellt), wobei die erste und zweite Nabenverlängerungskomponente bevorzugt parallel zur Hauptrotationsachse des Blattlagers 2 ausgebildet sind, insbesondere als Teilschalen der Rotornabenverlängerung 4. Der Pfeil 8 symbolisiert auf die Windkraftanlage einwirkenden Wind.

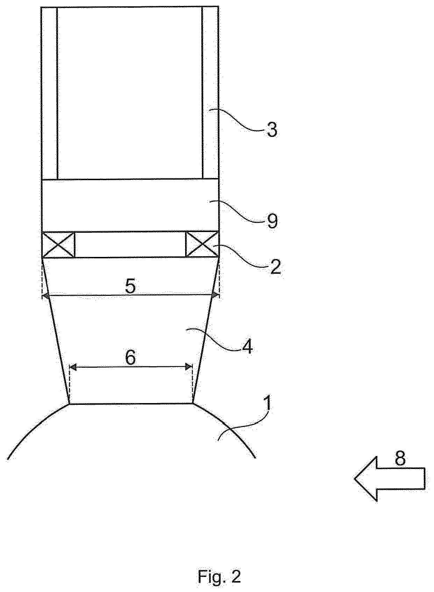

In **Figur 2** ist schematisch ein Teilbereich einer Windkraftanlage gemäß einer Ausführungsform der vorliegenden Erfindung dargestellt. Im Gegensatz zu der in Figur 1 dargestellten Ausführungsform ist ein Zwischenstück 9 zwischen dem Blattlager 2 und dem Rotorblatt 3 vorhanden, welches insbesondere als separates Teil ausgebildet ist und mit dem Blattlager 2 (insbesondere mit dem zweiten Blattlagerring 11) sowie dem Rotorblatt 3 verbunden ist. Das Zwischenstück 9 kann dabei verschiedene Formen aufweisen, beispielsweise zylindrisch oder konisch ausgebildet sein.

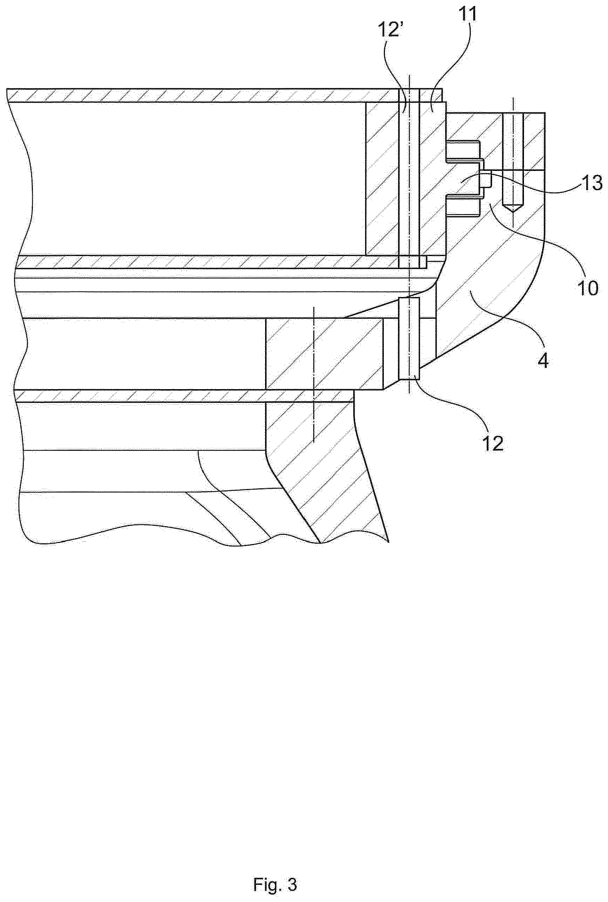

In **Figur 3** ist schematisch ein Teilbereich einer Windkraftanlage gemäß einer Ausführungsform der vorliegenden Erfindung dargestellt. Die Rotornabenverlängerung 4, in der dargestellten Ausführungsform der vorliegenden Erfindung als erster Blattlagerring 10 ausgeführt, weist die Durchführungsöffnung 12 auf, durch welche bei der Montage und Demontage des Rotorblattes 3 (hier nicht gezeigt) das Rotorblatt 3 mit Hilfe der Befestigungsöffnung 12' am zweiten Blattlagerring 11 verschraubt wird. Der zweite Blattlagerring 11 weist die Nase 13 auf, welche in der dargestellten Ausführungsform der vorliegenden Erfindung nach außen gerichtet ist. In alternativen Ausführungsformen der vorliegenden Erfindung kann die Nase 13 auf am ersten Blattlagerring 10 angeordnet sein und nach innen zeigen. Innen und außen beziehen sich dabei auf eine von dem Blattlager umschlossene Fläche orthogonal zur Drehachse des Blattlagers. Der drehende Blattlagerring ist hier der zweite Blattlagerring 11.

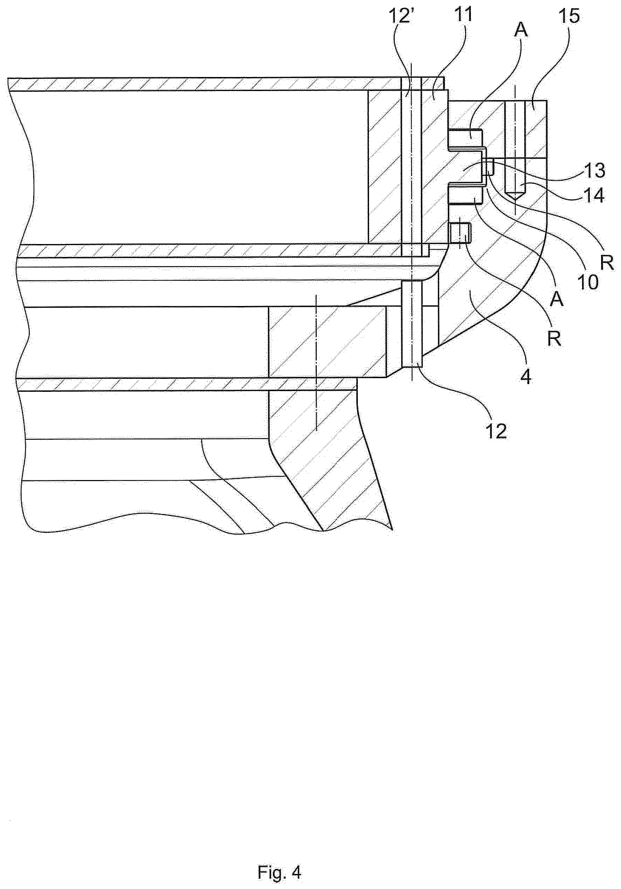

**Figur 4** zeigt schematisch einen Teilbereich einer Windkraftanlage gemäß einer weiteren Ausführungsform der vorliegenden Erfindung. Die Rotornabenverlängerung 4, in der dargestellten Ausführungsform der vorliegenden Erfindung als erster Blattlagerring 10 ausgeführt, weist die Durchführungsöffnung 12 auf, durch welche bei der Montage und Demontage des Rotorblattes 3 (hier nicht gezeigt) das Rotorblatt 3 mit Hilfe der Befestigungsöffnung 12' am zweiten Blattlagerring 11 verschraubt wird. Der zweite Blattlagerring 11 weist die Nase 13 auf, welche in der dargestellten Ausführungsform der vorliegenden Erfindung nach außen gerichtet ist. In alternativen Ausführungsformen der vorliegenden Erfindung kann die Nase 13 auf am ersten Blattlagerring 10 angeordnet sein und nach innen zeigen. Dargestellt ist eine vierreihige Rollendrehverbindung (4RD) mit den Axialrollen A und den Radialrollen R.. Die 4RD ist zumindest teilweise in die Rotornabenverlängerung 4 integriert; die Rotornabenverlängerung 4 bildet zumindest teilweise den ersten Blattlagerring 10. Die dargestellte Windkraftanlage weist weiterhin den Lagerteil 15 auf, welcher mit der Verschraubung 14 an der Rotornabenverlängerung 4 fixiert ist. Der drehende Blattlagerring ist hier der zweite Blattlagerring 11.

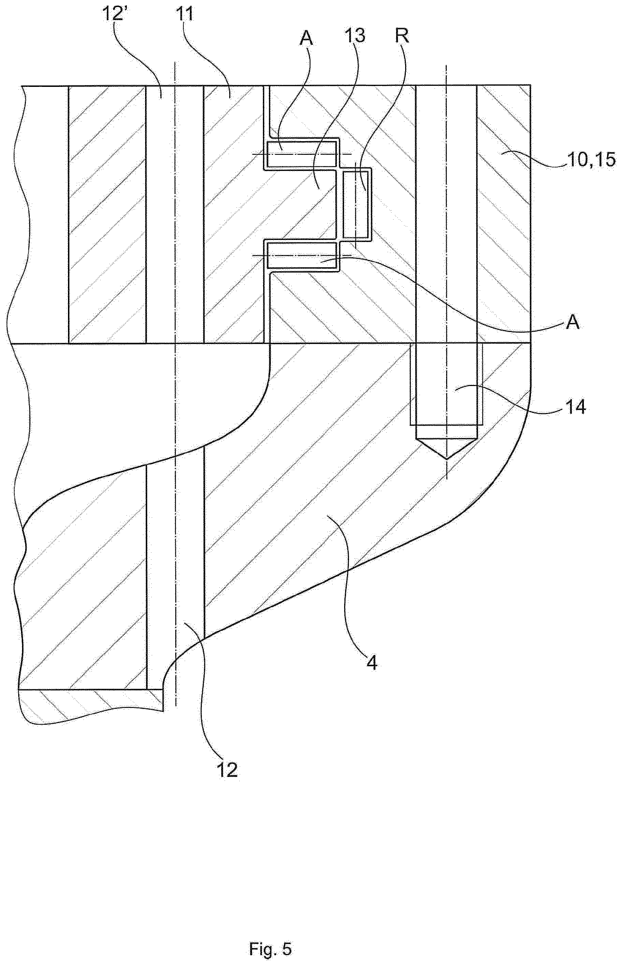

In **Figur 5** ist ein Teilbereich einer Windkraftanlage gemäß einer weiteren Ausführungsform der vorliegenden Erfindung dargestellt. Wie die in Figur 3 dargestellte Windkraftanlage weist die hier gezeigte Windkraftanlage die Rotornabenverlängerung 4, die Durchführungsöffnung 12, die Befestigungsöffnung 12' und den zweiten Blattlagerring 11 mit der Nase 13 auf. Als Lagerung dient hier ebenfalls eine dreireihige Rollendrehverbindung 3RD-Lager. Der erste Blattlagerring 10 ist nicht in die Rotornabenverlängerung 4 integriert, sondern als Lagerteil 15 mit der Verschraubung 14 an der Rotornabenverlängerung 4 fixiert. Der drehende Blattlagerring ist hier der zweite Blattlagerring 11.

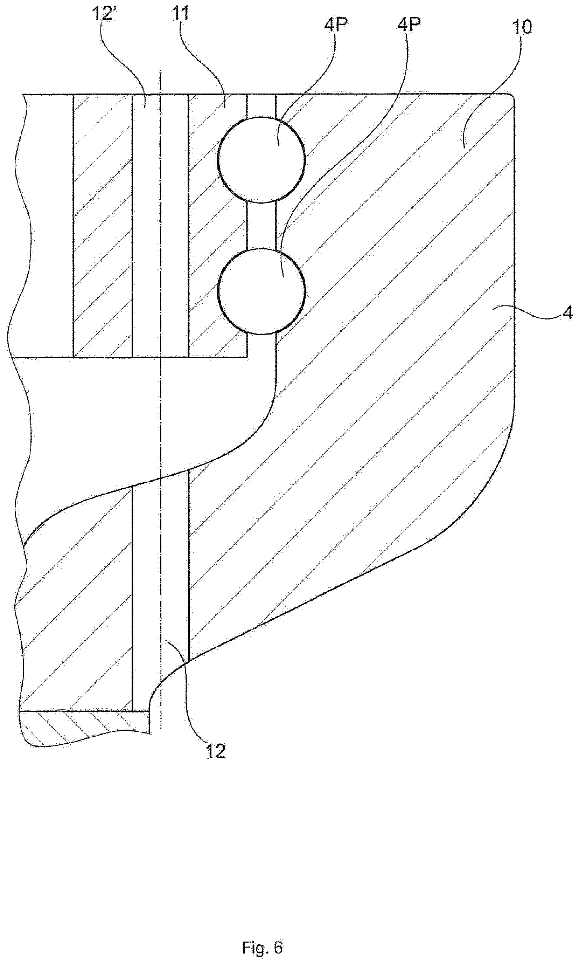

**Figur 6** zeigt schematisch einen Teilbereich einer Windkraftanlage gemäß einer weiteren Ausführungsform der vorliegenden Erfindung. Dargestellt sind die Rotornabenverlängerung 4, die Durchführungsöffnung 12, die Befestigungsöffnung 12' und der zweiten Blattlagerring 11. Die dargestellte Windkraftanlage weist ein Doppelvierpunktlager, aufweisend zwei Kugelreihen, auf. Der erste Blattlagerring 10 ist in die Rotornabenverlängerung 4 integriert. Der drehende Blattlagerring ist hier der zweite Blattlagerring 11.

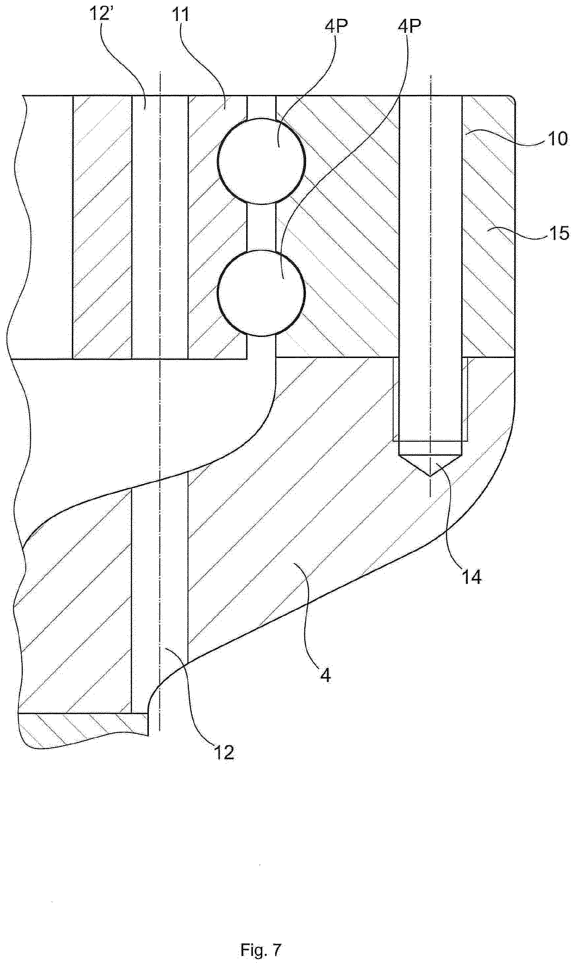

**Figur 7** zeigt schematisch einen Teilbereich einer Windkraftanlage gemäß einer weiteren Ausführungsform der vorliegenden Erfindung. Dargestellt sind die Rotornabenverlängerung 4, die Durchführungsöffnung 12, die Befestigungsöffnung 12' und der zweiten Blattlagerring 11. Die dargestellte Windkraftanlage weist ein Doppelvierpunktlager, aufweisend zwei Vierpunktlager 4P, auf. Das Lagerteil 15 ist mit der Verschraubung 14 an der Rotornabenverlängerung 4 fixiert und bildet den ersten Blattlagerring 10. Der drehende Blattlagerring ist hier der zweite Blattlagerring 11.

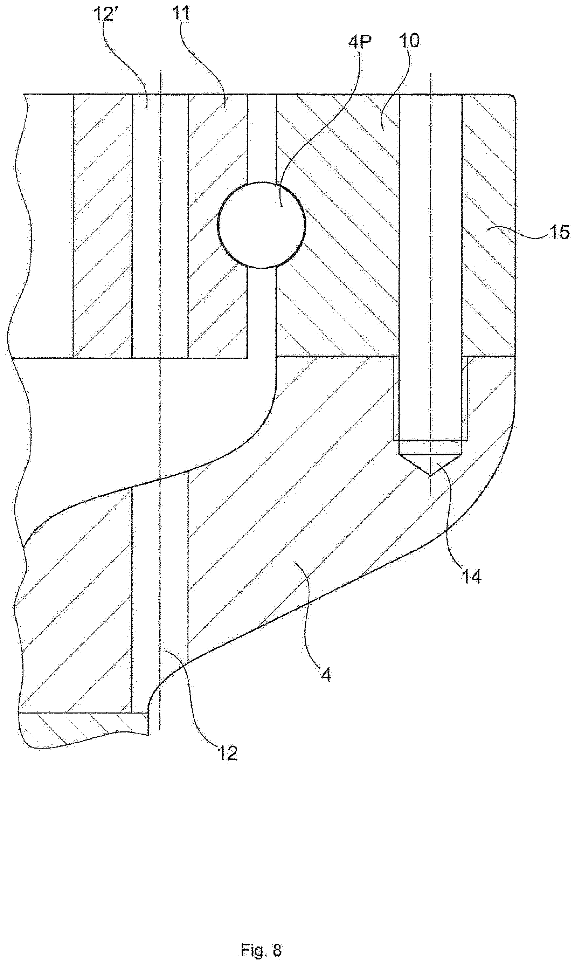

**Figur 8** zeigt schematisch einen Teilbereich einer Windkraftanlage gemäß einer weiteren Ausführungsform der vorliegenden Erfindung. Dargestellt sind die Rotornabenverlängerung 4, die Durchführungsöffnung 12, die Befestigungsöffnung 12' und der zweite Blattlagerring 11. Die dargestellte Windkraftanlage weist ein Vierpunktlager 4P auf. Das Lagerteil 15 ist mit der Verschraubung 14 an der Rotornabenverlängerung 4 fixiert und bildet den ersten Blattlagerring 10. Der drehende Blattlagerring ist hier der zweite Blattlagerring 11.

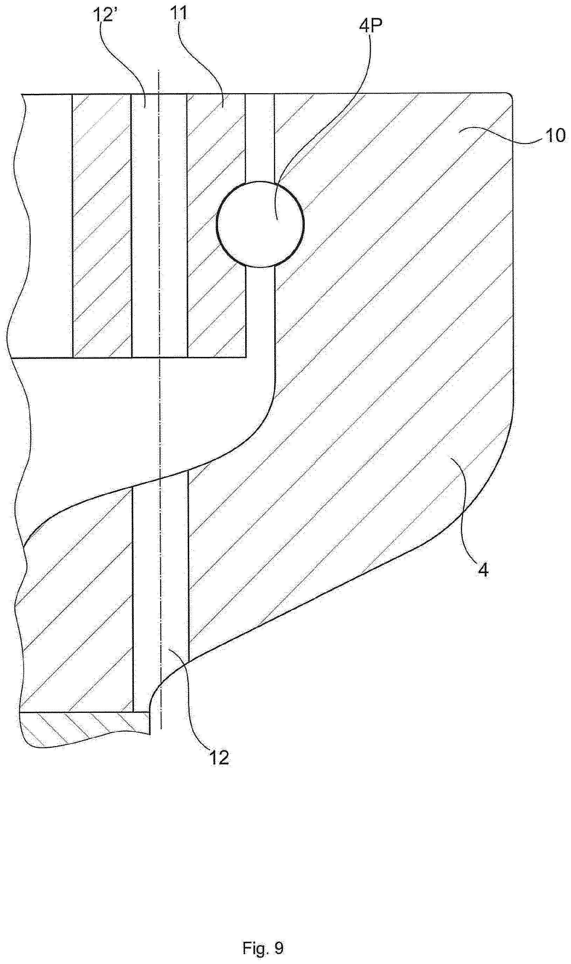

**Figur 9** zeigt schematisch einen Teilbereich einer Windkraftanlage gemäß einer weiteren Ausführungsform der vorliegenden Erfindung. Dargestellt sind die Rotornabenverlängerung 4, die Durchführungsöffnung 12, die Befestigungsöffnung 12' und der zweite Blattlagerring 11. Die dargestellte Windkraftanlage weist ein Vierpunktlager 4P auf. Der erste Blattlagerring 10 ist in die Rotornabenverlängerung 4 integriert. Der drehende Blattlagerring ist hier der zweite Blattlagerring 11.

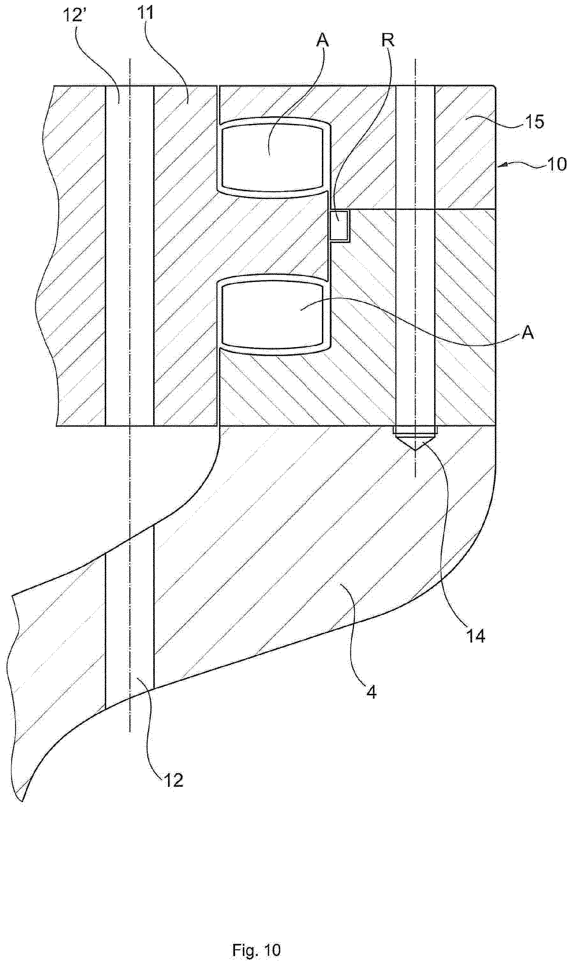

In **Figur 10** ist ein Teilbereich einer Windkraftanlage gemäß einer weiteren Ausführungsform der vorliegenden Erfindung dargestellt. Dargestellt sind die Rotornabenverlängerung 4, die Durchführungsöffnung 12, die Befestigungsöffnung 12' und der zweite Blattlagerring 11. Die dargestellte Windkraftanlage weist ein Toroidallager mit den tonnenförmigen Axialrollen A und den Radialrollen R auf. Das Lagerteil 15 ist mit der Verschraubung 14 an der Rotornabenverlängerung 4 fixiert und bildet den ersten Blattlagerring 10. In einer hier nicht dargestellten Ausführungsform kann der erste Blattlagerring 10 auch zumindest teilweise in die Rotornabenverlängerung 4 integriert sein. Der drehende Blattlagerring ist hier der zweite Blattlagerring 11.

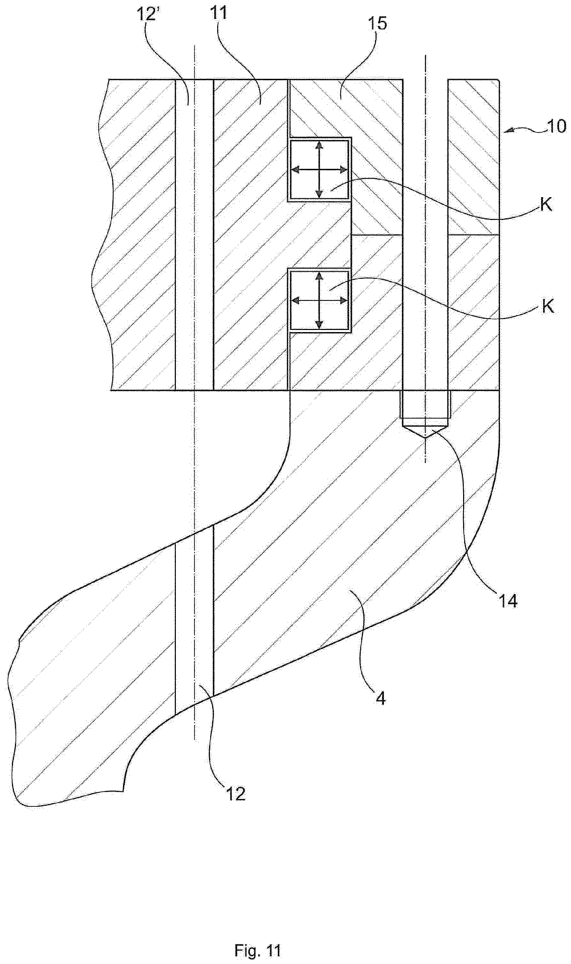

**Figur 11** zeigt schematisch einen Teilbereich einer Windkraftanlage gemäß einer weiteren Ausführungsform der vorliegenden Erfindung. Dargestellt sind die Rotornabenverlängerung 4, die Durchführungsöffnung 12, die Befestigungsöffnung 12' und der zweiten Blattlagerring 11. Die dargestellte Windkraftanlage weist ein Doppelkreuzrollenlager, aufweisend zwei Kreuzrollenreihen K, auf. Das Lagerteil 15 ist mit der Verschraubung 14 an der Rotornabenverlängerung 4 fixiert und bildet den ersten Blattlagerring 10. In einer hier nicht dargestellten Ausführungsform kann der erste Blattlagerring 10 auch zumindest teilweise in die Rotornabenverlängerung 4 integriert sein. Der drehende Blattlagerring ist hier der zweite Blattlagerring 11.

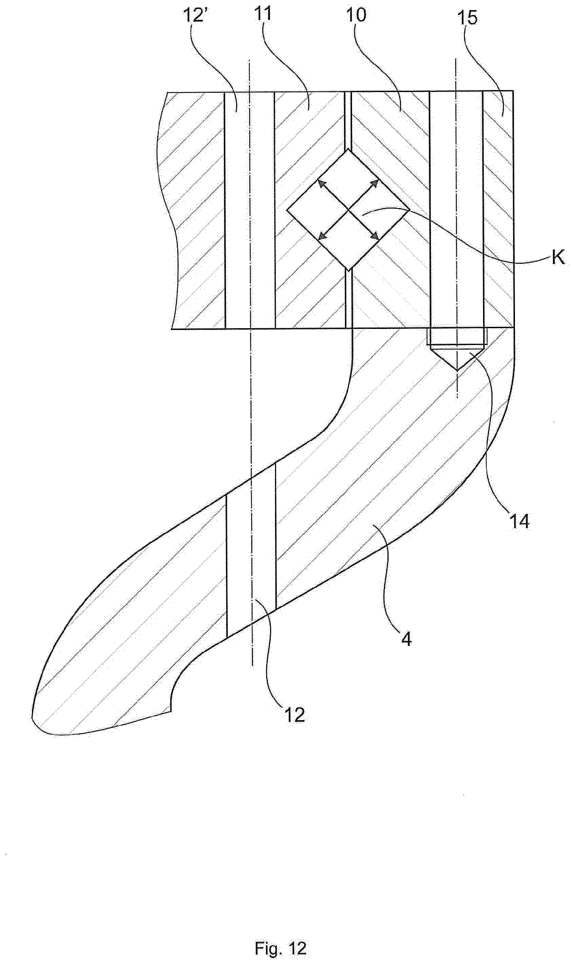

**Figur 12** zeigt schematisch einen Teilbereich einer Windkraftanlage gemäß einer weiteren Ausführungsform der vorliegenden Erfindung. Dargestellt sind die Rotornabenverlängerung 4, die Durchführungsöffnung 12, die Befestigungsöffnung 12' und der zweite Blattlagerring 11. Die dargestellte Windkraftanlage weist ein Kreuzrollenlager aufweisend eine Kreuzrollenreihe K auf. Das Lagerteil 15 ist mit der Verschraubung 14 an der Rotornabenverlängerung 4 fixiert und bildet den ersten Blattlagerring 10. In einer hier nicht dargestellten Ausführungsform kann der erste Blattlagerring 10 auch zumindest teilweise in die Rotornabenverlängerung 4 integriert sein. Der drehende Blattlagerring ist hier der zweite Blattlagerring 11.

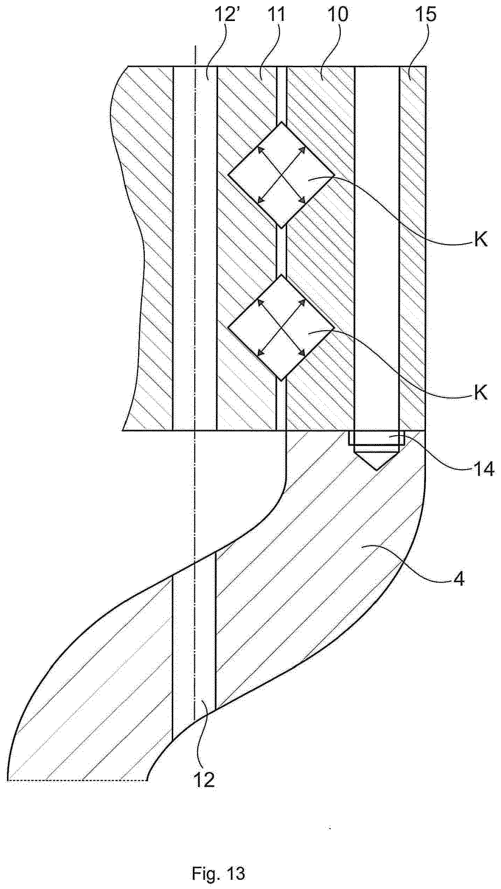

**Figur 13** zeigt schematisch einen Teilbereich einer Windkraftanlage gemäß einer weiteren Ausführungsform der vorliegenden Erfindung. Dargestellt sind die Rotornabenverlängerung 4, die Durchführungsöffnung 12, die Befestigungsöffnung 12' und der zweite Blattlagerring 11. Die dargestellte Windkraftanlage weist ein Doppelkreuzrollenlager, aufweisend zwei Kreuzrollenreihen K, auf, wobei die zwei Kreuzrollenreihen K im Vergleich mit der in Figur 11 dargestellten Ausführungsform um 45° verkippt sind. Das Lagerteil 15 ist mit der Verschraubung 14 an der Rotornabenverlängerung 4 fixiert und bildet den ersten Blattlagerring 10. In einer hier nicht dargestellten Ausführungsform kann der erste Blattlagerring 10 auch zumindest teilweise in die Rotornabenverlängerung 4 integriert sein. Der drehende Blattlagerring ist hier der zweite Blattlagerring 11.

### Bezugszeichenliste

- 1: Rotornabe
- 2: Blattlager
- 3: Rotorblatt
- 4: Rotornabenverlängerung
- 5: erster Durchmesser
- 6: zweiter Durchmesser
- 8: Wind
- 9: Zwischenstück
- 10: erster Blattlagerring
- 11: zweiter Blattlagerring
- 12: Durchführungsöffnung
- 12': Befestigungsöffnung
- 13: Nase
- 14: Verschraubung
- 15: Lagerteil
- A: Axialrolle
- K: Kreuzrollenlager
- R: Radialrolle
- 4P: Vierpunktlager

## Patentansprüche

1. Windkraftanlage, umfassend eine Rotornabe (1), ein Blattlager (2) und ein Rotorblatt (3), wobei eine konische Rotornabenverlängerung (4) zwischen der Rotornabe (1) und dem Blattlager (2) angeordnet ist, wobei die Rotornabenverlängerung (4) an ihrer dem Blattlager (2) zugewandten Seite einen ersten Durchmesser (5) aufweist und an ihrer der Rotornabe (1) zugewandten Seite einen zweiten Durchmesser (6) aufweist, wobei der erste Durchmesser (5) größer als der zweite Durchmesser (6) ist, wobei das Rotorblatt (3) mit dem Blattlager (2) mittelbar oder unmittelbar verbunden ist, wobei das Blattlager (2) einen ersten Blattlagerring (10) und einen zweiten Blattlagerring (11) umfasst, wobei der erste Blattlagerring (10) formschlüssig oder form- und kraftschlüssig mit der Rotornabenverlängerung (4) verbunden ist oder als Teil der Rotornabenverlängerung (4) ausgebildet ist, wobei der erste Blattlagerring (10) als äu-ßerer Blattlagerring und der zweite Blattlagerring (11) als innerer Blattlagerring ausgebildet ist, wobei die Rotornabenverlängerung (4) mindestens eine Durchführöffnung (12) zum Durchführen eines Befestigungselements zum Befestigen des Rotorblattes (3) am Blattlager (2) und/oder eines Werkzeuges im Wesentlichen parallel zur Hauptrotationsachse des Blattlagers (2) aufweist, wobei die mindestens eine Durchführöffnung (12) parallel zu einer zur Befestigung des Rotorblattes (3) mit dem inneren Blattlagerring (11) vorgesehenen Befestigungsöffnung (12') im inneren Blattlagerring (11) angeordnet ist, **dadurch gekennzeichnet, dass** die Mittellinien der Durchführöffnung (12) und der Befestigungsöffnung (12') miteinander fluchten.

2. Windkraftanlage nach Anspruch 1, wobei der zweite Blattlagerring (11) mit dem Rotorblatt (3) mittelbar oder unmittelbar verbunden ist.

3. Windkraftanlage nach einem der vorhergehenden Ansprüche, wobei ein Zwischenstück (9) zwischen dem Blattlager (2) und dem Rotorblatt (3) angeordnet ist.

4. Windkraftanlage nach einem der vorhergehenden Ansprüche, wobei die Rotornabenverlängerung (4) separat von der Rotornabe ausgebildet ist.

5. Windkraftanlage nach einem der vorhergehenden Ansprüche, wobei die Rotornabenverlängerung (4) unbeweglich, und insbesondere formschlüssig oder form- und kraftschlüssig, an der Rotornabe (1) angeordnet ist.

6. Windkraftanlage nach einem der vorhergehenden Ansprüche, wobei ein Pitchantrieb als Teil der Rotornabenverlängerung (4) ausgebildet ist oder innerhalb der Rotornabenverlängerung (4) angeordnet ist.

7. Windkraftanlage nach einem der vorhergehenden Ansprüche, wobei die Rotornabenverlängerung (4) eine erste Nabenverlängerungskomponente und eine zweite Nabenverlängerungskomponente umfasst, wobei die erste und zweite Nabenverlängerungskomponente bevorzugt parallel zur Hauptrotationsachse des Blattlagers (2) ausgebildet sind, insbesondere als Halbschalen der Rotornabenverlängerung (4).

8. Windkraftanlage nach einem der vorhergehenden Ansprüche, wobei die Rotornabenverlängerung (4), insbesondere die erste und/oder zweite Nabenverlängerungskomponente, Rippen aufweist, bevorzugt an der Innenseite der Rotornabenverlängerung (4).

9. Windkraftanlage nach einem der vorhergehenden Ansprüche, wobei eine Nase (13) an dem ersten Blattlagerring (10) oder dem zweiten Blattlagerring (11) angeordnet ist.

10. Windkraftanlage nach einem der vorhergehenden Ansprüche, wobei die Rotornabenverlängerung (4) mittels Gussverfahren hergestellt ist.

## Claims

1. Wind turbine comprising a rotor hub (1), a blade bearing (2) and a rotor blade (3), wherein a conical rotor-hub extension (4) is arranged between the rotor hub (1) and the blade bearing (2), wherein the rotor-hub extension (4) has a first diameter (5) at its side facing towards the blade bearing (2) and a second diameter (6) at its side facing towards the rotor hub (1), wherein the first diameter (5) is greater than the second diameter (6), wherein the rotor blade (3) is connected directly or indirectly to the blade bearing (2), wherein the blade bearing (2) comprises a first blade-bearing ring (10) and a second blade-bearing ring (11), wherein the first blade-bearing ring (10) is connected in a form-fitting manner, or form-fitting and force-fitting manner, to the rotor-hub extension (4) or is designed as part of the rotor-hub extension (4), wherein the first blade-bearing ring (10) is designed as an outer blade-bearing ring and the second blade-bearing ring (11) is designed as an inner blade-bearing ring, wherein the rotor-hub extension (4) has at least one through-passage opening (12) for through-passage of a fastening element for fastening the rotor blade (3) to the blade bearing (2) and/or of a tool substantially parallel to the main axis of rotation of the blade bearing (2), wherein the at least one through-passage opening (12) is arranged parallel to a fastening opening (12') in the inner blade-bearing ring (11), which fastening opening is provided for fastening of the rotor blade (3) to the inner blade-bearing ring (11), **characterized in that** centre lines of the through-passage opening (12) and the fastening opening (12') are aligned with one another.

2. Wind turbine according to Claim 1, wherein the second blade-bearing ring (11) is connected directly or indirectly to the rotor blade (3).

3. Wind turbine according to either of the preceding claims, wherein an intermediate piece (9) is arranged between the blade bearing (2) and the rotor blade (3).

4. Wind turbine according to one of the preceding claims, wherein the rotor-hub extension (4) is formed separately from the rotor hub.

5. Wind turbine according to one of the preceding claims, wherein the rotor-hub extension (4) is arranged in an immovable manner, and in particular in a form-fitting manner or form-fitting and force-fitting manner, on the rotor hub (1).

6. Wind turbine according to one of the preceding claims, wherein a pitch drive is designed as part of the rotor-hub extension (4) or is arranged within the rotor-hub extension (4).

7. Wind turbine according to one of the preceding claims, wherein the rotor-hub extension (4) comprises a first hub-extension component and a second hub-extension component, wherein the first and second hub-extension components are formed preferably parallel to the main axis of rotation of the blade bearing (2), in particular as half-shells of the rotor-hub extension (4).

8. Wind turbine according to one of the preceding claims, wherein the rotor-hub extension (4), in particular the first and/or second hub-extension component, has ribs, preferably on the inner side of the rotor-hub extension (4).

9. Wind turbine according to one of the preceding claims, wherein a nose (13) is arranged on the first blade-bearing ring (10) or the second blade-bearing ring (11).

10. Wind turbine according to one of the preceding claims, wherein the rotor-hub extension (4) is produced by means of casting.

## Revendications

1. Éolienne, comprenant un moyeu de rotor (1), un palier de pale (2) et une pale de rotor (3), un prolongement de moyeu de rotor conique (4) étant agencé entre le moyeu de rotor (1) et le palier de pale (2), le prolongement de moyeu de rotor (4) présentant un premier diamètre (5) sur son côté tourné vers le palier de pale (2) et présentant un deuxième diamètre (6) sur son côté tourné vers le moyeu de rotor (1), le premier diamètre (5) étant supérieur au deuxième diamètre (6), la pale de rotor (3) étant reliée directement ou indirectement au palier de pale (2), le palier de pale (2) comprenant une première bague de palier de pale (10) et une deuxième bague de palier de pale (11), la première bague de palier de pale (10) étant reliée par complémentarité de forme ou par complémentarité de forme et à force au prolongement de moyeu de rotor (4) ou étant réalisée en tant que partie du prolongement de moyeu de rotor (4), la première bague de palier de pale (10) étant réalisée en tant que bague de palier de pale extérieure et la deuxième bague de palier de pale (11) étant réalisée en tant que bague de palier de pale intérieure,
le prolongement de moyeu de rotor (4) présentant au moins une ouverture de passage (12) pour le passage d'un élément de fixation pour la fixation de la pale de rotor (3) au palier de pale (2) et/ou d'un outil essentiellement parallèle à l'axe de rotation principal du palier de pale (2), l'au moins une ouverture de passage (12) étant agencée parallèlement à une ouverture de fixation (12') prévue dans la bague de palier de pale intérieure (11) pour la fixation de la pale de rotor (3) à la bague de palier de pale intérieure (11), **caractérisée en ce que** les lignes centrales de l'ouverture de passage (12) et de l'ouverture de fixation (12') sont alignées entre elles.

2. Éolienne selon la revendication 1, dans laquelle la deuxième bague de palier de pale (11) est reliée directement ou indirectement à la pale de rotor (3).

3. Éolienne selon l'une quelconque des revendications précédentes, dans laquelle une pièce intermédiaire (9) est agencée entre le palier de pale (2) et la pale de rotor (3).

4. Éolienne selon l'une quelconque des revendications précédentes, dans laquelle le prolongement de moyeu de rotor (4) est réalisé séparément du moyeu de rotor.

5. Éolienne selon l'une quelconque des revendications précédentes, dans laquelle le prolongement de moyeu de rotor (4) est agencé de manière immobile, et notamment par complémentarité de forme ou par complémentarité de forme et à force, sur le moyeu de rotor (1).

6. Éolienne selon l'une quelconque des revendications précédentes, dans laquelle un entraînement de pas est réalisé en tant que partie du prolongement de moyeu de rotor (4) ou est agencé à l'intérieur du prolongement de moyeu de rotor (4).

7. Éolienne selon l'une quelconque des revendications précédentes, dans laquelle le prolongement de moyeu de rotor (4) comprend un premier composant de prolongement de moyeu et un deuxième composant de prolongement de moyeu, le premier et le deuxième composant de prolongement de moyeu étant de préférence réalisés parallèlement à l'axe de rotation principal du palier de pale (2), notamment sous forme de demi-coques du prolongement de moyeu de rotor (4).

8. Éolienne selon l'une quelconque des revendications précédentes, dans laquelle le prolongement de moyeu de rotor (4), notamment le premier et/ou le deuxième composant de prolongement de moyeu, présente des nervures, de préférence sur le côté intérieur du prolongement de moyeu de rotor (4).

9. Éolienne selon l'une quelconque des revendications précédentes, dans laquelle un nez (13) est agencé sur la première bague de palier de pale (10) ou sur la deuxième bague de palier de pale (11).

10. Éolienne selon l'une quelconque des revendications précédentes, dans laquelle le prolongement de moyeu de rotor (4) est fabriqué au moyen d'un procédé de moulage.
